(19) Europäisches Patentamt
European Patent Office
Office européen des brevets

(11) **EP 2 561 662 B1**

(12) **EUROPÄISCHE PATENTSCHRIFT**

(45) Veröffentlichungstag und Bekanntmachung des Hinweises auf die Patenterteilung:
**01.02.2017 Patentblatt 2017/05**

(51) Int Cl.:
*H04L 29/06* (2006.01)   *H04L 9/32* (2006.01)
*G06F 21/00* (2013.01)

(21) Anmeldenummer: **11740615.7**

(22) Anmeldetag: **22.07.2011**

(86) Internationale Anmeldenummer:
**PCT/EP2011/062641**

(87) Internationale Veröffentlichungsnummer:
**WO 2012/016858 (09.02.2012 Gazette 2012/06)**

(54) **VERFAHREN UND VORRICHTUNG ZUM BEREITSTELLEN EINES EINMALPASSWORTES**

METHOD AND APPARATUS FOR PROVIDING A ONE-TIME PASSWORD

PROCÉDÉ ET DISPOSITIF POUR FOURNIR UN MOT DE PASSE À USAGE UNIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.08.2010 DE 102010033232**

(43) Veröffentlichungstag der Anmeldung:
**27.02.2013 Patentblatt 2013/09**

(73) Patentinhaber: **Siemens Aktiengesellschaft**
**80333 München (DE)**

(72) Erfinder:
• **BUSSER, Jens-Uwe**
**81739 München (DE)**
• **FRIES, Steffen**
**85598 Baldham (DE)**

(56) Entgegenhaltungen:
**US-A1- 2007 079 135   US-A1- 2008 276 098**

EP 2 561 662 B1

**Beschreibung**

Die Erfindung betrifft ein Verfahren und eine Vorrichtung zum Bereitstellen eines Einmalpasswortes für ein Nutzergerät für dessen Anmeldung bei einem Server.

In vielen Anwendungsfällen sind Nutzergeräte mit einem Server über ein unsicheres Datennetzwerk verbunden. Damit die Nutzergeräte bzw. Client-Geräte Daten in abgesicherter Form mit dem Server austauschen können, werden die Nutzergeräte daher mit entsprechenden Security-Credentials versorgt. Diese Security-Credentials, bei denen es sich beispielsweise um Passwörter oder um sonstige Sicherheitstoken handeln kann, werden in vielen Fällen von einer zentralen Komponente, beispielsweise einem Server eines Dienstleistungsanbieters, erzeugt und anschließend an die Nutzergeräte bzw. Administratoren von derartigen Nutzergeräten oder Diensten verteilt. In vielen Fällen werden sogenannte Einmalpasswörter (OTP - One Time Passwort) genutzt. Mit einem derartigen Einmalpasswort OTP kann sich das Nutzergerät bzw. der Client ein einziges Mal direkt für einen entsprechenden Dienst bei einem Server anmelden. Der Client muss für zukünftige Anmeldungen entweder ein neues Passwort setzen oder erhält von dem Server ein Sicherheitstoken, beispielsweise ein digitales Zertifikat oder einen sogenannten Cookie. Weiterhin ist es möglich das weitere Einmalpasswörter verwendet werde, die beispielsweise vorab in einer Liste verschickt werden, beispielsweise TANs oder Hash-Ketten. Als Einmalpasswörter verwendet man üblicherweise zufällige Zeichenfolgen. Nach Generierung eines Einmalpasswortes wird das Einmalpasswort OTP in einer Datenbank gespeichert. Meldet sich ein Nutzergerät bzw. ein Client bei dem Server an, so wird das Einmalpasswort (OTP) als benutzt gekennzeichnet oder aus der Datenbank gelöscht. Eine zweite Anmeldung des Nutzergerätes bei dem Server mit diesem Einmalpasswort ist dann nicht mehr möglich. Alternativ ist möglich, eine ausreichende Menge von Einmalpasswörter nach einem bestimmten festgelegten Verfahren zu erzeugen und nur die bereits verwendeten Einmalpasswörter in der Datenbank zu speichern. Werden Hash-Ketten verwendet, so wird beispielsweise nur das zuletzt verwendete Einmalpasswort OTP in der Datenbank gespeichert. Üblicherweise wird das Einmalpasswort OTP auf Seiten des Servers gespeichert, um einen Vergleich bei der Anmeldung des Nutzergerätes bei dem Server zu ermöglichen.

Weiter Beispiele für herkömmliche Einmalpasswörter OTP sind sogenannte Transaktionsnummern TAN und mobile Transaktionsnummern TANs, die beispielsweise im Onlinebanking verwendet werden.

Bei herkömmlichen Einmalpasswörtern OTP ist es allerdings nicht möglich die Nutzung eines Einmalpasswortes OTP einzuschränken bzw. an eine bestimmte Bedingung zu knüpfen. Dies ist allerdings in vielen Fällen wünschenswert, beispielsweise wenn sich ein Nutzer von einem bestimmten Gerät aus bei dem Server anmelden soll oder wenn die Anmeldung des Nutzergerätes bei dem Server nur zu einer bestimmten Zeit erfolgen darf.

Die US 2008 / 0 276 098 A1 offenbart ein System zum Bereitstellen eines sicheren Zugangs für Benutzer zu einem Server von unsicheren Endgeräten aus.

Die US 2007 / 0 079 135 A offenbart ein System zur Authentifizierung von Benutzern.

Es ist daher eine Aufgabe der vorliegenden Erfindung ein Verfahren zum Bereitstellen eines Einmalpasswortes für ein Nutzergerät zu schaffen, das die Möglichkeit bietet zusätzliche Bedingungen an das Einmalpasswort zu knüpfen.

Diese Aufgabe wird erfindungsgemäß durch ein Verfahren mit den im Patentanspruch 1 angegebenen Merkmalen und einen Server mit den in dem Patentanspruch 10 angegebenen Merkmalen gelöst.

Bei einer möglichen Ausführungsform des erfindungsgemäßen Verfahrens wird der eindeutige Nutzungsidentifikator durch eine Nutzer-ID des Nutzers gebildet.

Bei einer weiteren möglichen Ausführungsform wird der eindeutige Nutzungsidentifikator durch eine Nutzergeräte-ID des Nutzergerätes gebildet.

Bei einer weitern möglichen Ausführungsform des erfindungsgemäßen Verfahrens wird der eindeutige Nutzungsidentifikator durch eine Kombination der Nutzer-ID des Nutzers sowie der Nutzergeräte-ID des Nutzergerätes gebildet.

Bei einer möglichen Ausführungsform des erfindungsgemäßen Verfahrens generiert der Server das Einmalpasswort durch Berechnen eines kryptographischen Funktionswertes des eindeutigen Nutzungsidentifikators.

Bei einer möglichen Ausführungsform des erfindungsgemäßen Verfahrens berechnet der Server als Einmalpasswort (OTP) den kryptographischen Funktionswert des Nutzungsidentifikators mittels eines geheimen kryptographischen Schlüssels.

Bei einer möglichen Ausführungsform des erfindungsgemäßen Verfahrens berechnet der Server als Einmalpasswort (OTP) den kryptographischen Funktionswert mittels einer vorgegebenen kryptographischen Funktion, insbesondere einer Hash-Funktion, für den eindeutigen Nutzungsidentifikators des geheimen kryptographischen Schlüssels.

Bei einer möglichen Ausführungsform des erfindungsgemäßen Verfahrens berechnet der Server als Einmalpasswort (OTP) den kryptographischen Funktionswert zusätzlich in Abhängigkeit eines Zeitstempels.

Bei einer weiteren möglichen Ausführungsform des erfindungsgemäßen Verfahrens berechnet der Server als Einmalpasswort (OTP) den kryptographischen Funktionswert zusätzlich in Abhängigkeit einer Zufallszahl.

Bei einer möglichen Ausführungsform des erfindungsgemäßen Verfahrens speichert das Nutzergerät das von dem Server empfangene Einmalpasswort (OTP) und überträgt dieses Einmalpasswort (OTP) bei einer Anmeldung des Nutzergerätes bei dem Server zusammen mit dem Nutzungsidentifikator.

Bei einer möglichen Ausführungsform des erfindungsgemäßen Verfahrens verifiziert der Server bei der Anmeldung des Nutzungsgerätes bei dem Server das Nutzungsgerät anhand des in dem Einmalpasswort (OTP) implizit enthaltenen Nutzungsidentifikators.

Bei einer möglichen Ausführungsform des erfindungsgemäßen Verfahrens löscht der Server das durch ihn generierte Einmalpasswort (OTP) nach der Übertragung des generierten Einmalpasswortes (OTP) an das jeweilige Nutzergerät.

Bei einer möglichen Ausführungsform des erfindungsgemäßen Verfahrens wird das generierte Einmalpasswort (OTP) zusammen mit dem Nutzergerät an den Nutzer zur Anmeldung des Nutzergerätes des Nutzers an dem Server verschickt.

Bei einer möglichen Ausführungsform des erfindungsgemäßen Verfahrens wird das generierte Einmalpasswort (OTP) von dem Server über ein Datennetzwerk oder mittels eines Datenträgers zu einem bei dem Nutzer aufgestellten Nutzergerät zu dessen Anmeldung bei dem Server verschickt.

Bei einer möglichen Ausführungsform des erfindungsgemäßen Verfahrens verfällt eine Gültigkeit des von dem Server generierten Einmalpasswortes (OTP) nach einer vorgegebenen Zeitdauer.

Bei einer möglichen Ausführungsform des erfindungsgemäßen Servers, wird der eindeutige Nutzungsidentifikator durch eine Nutzer-ID eines Nutzers gebildet.

Bei einer alternativen Ausführungsform des erfindungsgemäßen Servers wird der eindeutige Nutzungsidentifikator durch eine Nutzergeräte-ID des Nutzergerätes gebildet.

Bei einer möglichen Ausführungsform des erfindungsgemäßen Servers wird bei einer Anmeldung des Nutzergerätes bei dem Server das Nutzergerät anhand des in dem von dem Server empfangenen Einmalpasswort implizit enthaltenen Nutzungsidentifikators verifiziert.

Im Weiteren wird eine mögliche Ausführungsform des erfindungsgemäßen Verfahrens und des erfindungsgemäßen Systems zum Bereitstellen eines Einmalpasswortes (OTP) unter Bezugnahme auf die beigefügte Figur beschrieben.

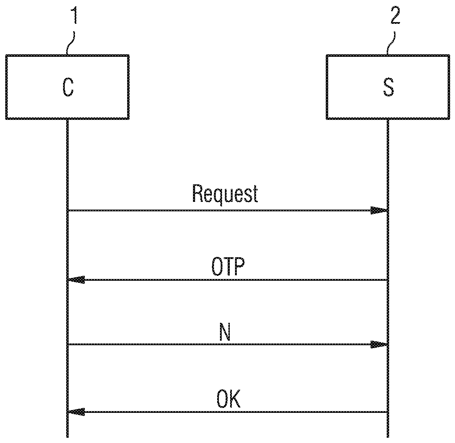

Figur 1    zeigt ein Signalablaufdiagramm zur Verdeutlichung des erfindungsgemäßen Verfahrens und des erfindungsgemäßen Servers zum Bereitstellen eines Einmalpasswortes.

Wie man in Figur 1 erkennen kann, kommunizieren ein Nutzergerät 1 und ein Server 2 über ein Datennetzwerk und tauschen Nachrichten aus. Bei dem Nutzergerät 1 kann es sich um ein beliebiges Nutzergerät handeln, das bei einem Nutzer, beispielsweise in einem Haushalt, aufgestellt wird. Das Nutzergerät 1 kann ein mobiles oder ein fest installiertes Nutzergerät sein. Bei dem Datennetzwerk kann es sich um ein drahtloses oder drahtgebundenes Datennetzwerk, sowie um ein Geflecht verschiedener Datennetzwerke handeln, beispielsweise das Internet.

Ein Beispiel für ein Nutzergerät 1 ist ein Energiegateway für ein intelligentes Stromversorgungsnetzwerk. Weiter Beispiele sind Medizingeräte, die zum Austausch von Patientendaten mit einem entsprechenden Dienstleistungsserver im Raum eines Patienten aufgestellt werden. Weitere mögliche Beispiele sind Feuermelder bzw. Alarmmelder, die eine Alarmmeldung an einen Dienstleister, beispielsweise die Feuerwehr, liefern. Weiterhin kann es sich bei dem Nutzergerät 1 um ein Kommunikationsgerät, beispielsweise eine Pay-TV-Box handeln, welche einem Nutzer ermöglicht Filme von einem Server 2 zu empfangen. Der Server 2 kann sich beispielsweise bei einem Dienstleitungsanbieter bzw. Serviceprovider befinden. Der Serviceprovider kann selbst bzw. im Auftrag Nutzungsgeräte 1 herstellen lassen und an mögliche Kunden ausliefern. Alternativ können die Nutzergeräte 1 im freien Handel erworben werden. Die Nutzergeräte 1 sind jeweils über eine Seriennummer oder dergleichen eindeutig identifizierbar. Weiterhin kann jeder Kunde bzw. Nutzer eine eindeutige Kundennummer besitzen. Möchte ein Kunde, der ein Nutzergerät 1 von einem Serverprovider erhalten hat oder im freien Handel erworben hat, das Nutzergerät 1 bei dem Dienstleistungsanbieter anmelden, sendet er, wie in Figur 1 dargestellt, eine Anforderungsnachricht bzw. einen Request über das Datennetzwerk an den Server 2 des Dienstleistungsanbieters. Mit einem in dem Server 2 vorgesehenen Generator wird daraufhin ein Einmalpasswort OTP in einer kryptographischen Operation in Abhängigkeit eines eindeutigen Nutzungsidentifikators generiert. Bei einem Nutzungsidentifikator kann es sich beispielsweise um eine Nutzer-ID des Nutzers, insbesondere eine Kundennummer, handeln. Alternativ kann es sich bei dem Nutzungsidentifikator um eine Nutzergeräte-ID, beispielsweise einer Seriennummer des Nutzergerätes 1, handeln. Weiterhin ist es möglich, das es sich bei dem Nutzungsidentifikator um eine eindeutige Adresse, beispielsweise eine MAC-Adresse handelt. Der Server 2 überträgt das durch die kryptographische Operation gebildete Einmalpasswort OTP an das anzumeldenden Nutzergerät 1 über das Datennetzwerk, wie in Figur 1 dargestellt.

Das generierte Einmalpasswort OTP kann, wie in Figur 1 dargestellt, über das Datennetzwerk zu dem Nutzergerät 1 übertragen werden oder auch alternativ über einen anderen Kommunikationskanal. Ferner ist es möglich, dass das generierte Einmalpasswort OTP mittels eines Datenträgers offline von dem Server 2 zu dem Nutzergerät 1 übertragen wird. Dieser Datenträger kann beispielsweise durch einen USB-Stick gebildet sein. Der Datenträger wird bei einer möglichen Ausführungsform zusammen mit dem aufzustellenden Nutzergerät 1 von einem Serviceprovider in einem Paket per Post an den Nutzer verschickt. Der Nutzer schließt dann den beigefügten Datenträger, beispielsweise einen USB-Stick zum Auslesen des Einmalpasswortes OTP an das Nutzergerät 1 an, sodass sich das Nutzergerät 1 mit Hilfe des ausgelesenen Einmalpasswortes OTP bei dem Server 2 zur Freischaltung des Dienstes anmelden kann.

Weiterhin ist es möglich, dass der Datenträger, beispielsweise der USB-Stick, welcher das generierte Einmalpasswort OTP transportiert, getrennt von dem Nutzergerät 1 in einem anderen Paket an den Nutzer verschickt wird. Bei einer weitern möglichen Ausführungsform ist der Datenträger ein in dem Nutzergerät 1 integrierter Datenspeicher. Dieser Datenspeicher kann beispielsweise zugangsgeschützt sein und mit Hilfe eines Passwortes freigeschaltet werden, damit der Nutzer Zugriff auf das darin abgespeicherte Einmalpasswort OTP erhält. Sobald der Nutzer bzw. das Nutzergerät 1 das von dem Server 2 gebildete Einmalpasswort OTP online oder offline erhalten hat, kann das Nutzergerät 1 durch eine Anmeldenachricht N sich bei dem Server 2 für den jeweiligen Dienst anmelden. Bei dem von dem Server 2 generierten und von dem Nutzergerät 1 empfangenen Einmalpasswort OTP ist der Nutzungsidentifikator, beispielsweise ein Benutzerkonto bzw. eine Kundennummer oder ein entsprechender Geräteidentifikator, beispielsweise eine Seriennummer, in dem Einmalpasswort OTP implizit enthalten bzw. eincodiert. Dadurch wird verhindert, dass sich ein anderer Nutzer bzw. ein anderes Gerät mit diesem Einmalpasswort OTP bei einem Server 2 anmelden kann. Bildet der Server 2 beispielsweise das Einmalpasswort OTP für ein Nutzergerät 1 mittels einer Hash-Funktion aus der bekannten Geräte-ID und einem geheimen kryptographischen Schlüssel der Geräte-ID ist das gebildete Einmalpasswort OTP eindeutig: $OTP=H(K_{priv}, \text{Geräte-ID})$. In diesem Falle wird die Geräte-ID des Nutzergerätes 1 bei der Anmeldung, das heißt bei der Übersendung der Anmeldenachricht N als Teil der Nachricht N zu dem Server 2 mitgeschickt. Dann kann der Server 2 unter Nutzung des geheimen kryptographischen Schlüssels ($K_{priv}$) die Richtigkeit des Einmalpasswortes OTP effizient überprüfen, ohne dass das Einmalpasswort OTP zur Überprüfung zentral in dem Server 2 hinterlegt sein muss. Es besteht daher bei dem erfindungsgemäßen Verfahren die Möglichkeit, dass der den Server 2 der durch ihn generierte Einmalpasswörter OTP nach der Übertragung an die Nutzergeräte 1 aus seinem Datenspeicher löscht bzw. entfernt. Dadurch kann der Verwaltungsaufwand auf Seiten des Servers 2 bzw. des Dienstleistungsanbieters erheblich reduziert werden. Weiterhin bietet dies den besonderen Vorteil, dass bei einem Ausfall eines Datenspeichers auf Seiten des Servers 2 selbst bei Verlust von derartigen Einmalpasswörtern OTP erfolgreich eine Verifizierung eines erhaltenen Einmalpasswortes OTP auf Seiten des Servers 2 durchgeführt werden kann.

Bei einer weiteren möglichen Ausführungsform verfällt eine Gültigkeit eines von dem Server 2 generierten Einmalpasswortes OTP nach einer vorgegebenen konfigurierbaren Zeitdauer, beispielsweise nach einigen Minuten oder Stunden. Ist die Anmeldung des Nutzergerätes 1 erfolgreich kann dies der Server 2 dem Nutzergerät 1 mit einer OK-Nachricht mitteilen.

Bei einer möglichen Ausführungsform wird bei einer Übertragung der Anmeldenachricht N von dem Nutzergerät 1 an den Server 2 das Einmalpasswort OTP nicht im Klartext sondern kryptographisch geschützt übertragen. Bei einer weiteren möglichen Ausführungsform erfolgt die Übertragung der Nachricht N zur Anmeldung des Nutzergerätes 1 bei dem Server 2 über eine kryptographisch geschützte Verbindung, beispielsweise eine TLS- oder SSL-Verbindung. Dabei ist es möglich, dass die übertragene Anmeldenachricht N anhand einer Prüfsumme verifiziert wird.

Bei einer weiteren bevorzugten Ausführungsform geschieht die Berechnung des kryptographischen Funktionswertes, der das Einmalpasswort OTP bildet, mit einer vorgegebenen kryptographischen Funktion, beispielsweise einer Hash-Funktion, für den eindeutigen Nutzungsidentifikator mittels des geheimen kryptographischen Schlüssels unter Verwendung zusätzlicher Informationen bzw. Daten. Dabei kann der Server 2 bei einer möglichen Ausführungsform als Einmalpasswort OTP den kryptographischen Funktionswert zusätzlich in Abhängigkeit eines Zeitstempels berechnen. Eine Zeitangabe bzw. ein Zeitstempel zum Beispiel <MMJJ> oder <TTMMJJ> oder <Tage seit 01.01.2010> ermöglicht es, dass man pro Konto eines Nutzers und Monat bzw. Tag ein weiteres Einmalpasswort OTP erzeugt. Diese Ausführungsform eignet sich insbesondere für den Fall, dass ein Einmalpasswort OTP nur kurz gültig ist und nur selten ein neues Einmalpasswort benötigt wird. Weiterhin ist es möglich an dieser Stelle einen sogenannten UTC-Zeitwert einzusetzen. Eine Unix Time beschreibt dabei beispielsweise die seit dem 01.01.1970 vergangene Anzahl von Sekunden. Dadurch ist es möglich, sehr schnell wechselnde Einmalpasswörter OTP für einen bestimmten Nutzungsidentifikator zu erzeugen, beispielsweise: $OTP=Hash(K, ID, <TTMMJJ>)$.

Diese Ausführungsform kann eine Zeitangabe zur Erzeugung bzw. Überprüfung eines Einmalpasswortes OTP benutzen, wobei eine synchronisierte Zeitangabe verfügbar sein muss. Bei einer möglichen Ausführungsform erfolgt eine Zeitsynchronisation durch Protokolle, wie beispielsweise NTP (Network Time Protocol) oder IEEE 1588.

Bei einer weitern möglichen Ausführungsform sendet der Server als Einmalpasswort OTP einen kryptographischen Funktionswert zusätzlich in Abhängigkeit einer Zufallszahl. Diese Zufallszahl kann beispielsweise durch einen Zufallsgenerator generiert werden. Beispielsweise wird das Einmalpasswort OTP wie folgt berechnet:

$$OTP=Hash(K,<\text{Zufallszahl}>,ID) \parallel <\text{Zufallszahl}>$$

Damit kann man bei entsprechend langer Zufallszahl beliebig viele Einmalpasswörter OTP erzeugen.

Bei einer speziellen Variante kann anstatt eines Hash-Verfahrens, in dem ein Schlüssel K direkt mit einer Nachricht konkateniert wird, ein sogenanntes Keyed-Hash-Verfahren eingesetzt werden. Bei einer möglichen Ausführungsform wird der Keyed-Hash-Wert wie in Standard RFC 2104 berechnet:

$$\mathrm{HMAC(K,m)=H((K\ XOR\ opad)\ ||\ H((K\ XOR\ ipad)\ ||m))}$$

wobei m eine Nachricht, beispielsweise eine Anmeldenachricht ist und wobei

opad und ipad vordefinierte Strings bzw. Zeichenketten sind und

wobei K ein Einmalpasswort OTP bzw. einer von dem Einmalpasswort OTP abhängiger Wert, beispielsweise K=H(OTP), ist.

Bei einer weiteren möglichen Ausführungsvariante kann anstatt des Hash-Verfahrens auch ein symmetrischer Verschlüsselungsalgorithmus, beispielsweise AES (Advanced Encryption Standard) in einem CBCMAC-Modus (Cipher Block Chaining Message Authentication Code) genutzt werden.

Das erfindungsgemäße Verfahren bietet einige Vorteile. Mit dem erfindungsgemäßen Verfahren ist es möglich ein Einmalpasswort OTP nach einer fest definierten Regel unter Verwendung einer kryptographischen Operation derart zu erzeugen, dass das Einmalpasswort OTP an einen bestimmten Nutzungsidentifikator, beispielsweise eine Nutzer-ID bzw. einer Nutzerkontennummer, gebunden werden kann. Ferner ist es nicht notwendig, dass gebildete Einmalpasswort OTP vor seiner Verwendung auf einen Datenspeicher des Servers 2 zu speichern, so dass insgesamt die Verwaltung dieser Daten erheblich erleichtert wird.

Bei einer möglichen Ausführungsform ist es möglich das Einmalpasswort OTP an einen Kundennamen eines Nutzers, beispielsweise eines Kunden eines Stromversorgungsunternehmens, zu binden. Weiterhin ist es mit dem erfindungsgemäßen Verfahren Möglich, bei Bedarf weitere Einmalpasswörter OTP für den gleichen Nutzer bzw. zum gleichen Kundennamen zu erzeugen. Das gebildete Einmalpasswort OTP ist kryptographisch genauso sicher wie eine reine Zufallszahl. Der Erzeuger bzw. der Server 2 des Einmalpasswortes OTP muss dieses gebildete Einmalpasswort OTP nicht speichern. Es muss seitens des Servers 2 lediglich gespeichert werden, welche Konten bzw. Geräte ihre Einmalpasswörter OTP bereits genutzt bzw. welche Konten bzw. Geräte ihre Einmalpasswörter OTP noch benutzen dürfen. Dies reduziert die zu schützenden Daten auf den kryptographischen Schlüssel K, der zu Erzeugung der Einmalpasswörter OTP verwendet wird. Die Gültigkeit eines Einmalpasswortes OTP kann zudem zeitlich begrenzt werden. Das erfindungsgemäße Verfahren und System eröffnet somit einem Dienstleistungsanbieter bzw. Serviceprovider die Möglichkeit Einmalpasswörter OTP an bestimmte Bedingungen zu knüpfen und erlaubt somit eine Erhöhung der Flexibilität des Dienstleistungsanbieters und eine Erhöhung der Sicherheit gegenüber Manipulationen.

**Patentansprüche**

1. Verfahren zum Bereitstellen eines Einmalpasswortes (OTP) für ein Nutzergerät (1) eines Nutzers, das zur Anmeldung des Nutzergerätes (1) bei einem Server (2) vorgesehen ist,
   wobei der Server (2) das Einmalpasswort (OTP) mittels einer kryptographischer Operation in Abhängigkeit eines eindeutigen Nutzungsidentifikators generiert und an das Nutzergerät (1) überträgt,
   wobei das Nutzergerät (1) das von dem Server (2) empfangene Einmalpasswort (OTP) speichert und bei einer Anmeldung des Nutzergerätes (1) bei dem Server (2) zusammen mit dem Nutzungsidentifikator überträgt,
   wobei der Server (2) bei der Anmeldung des Nutzergerätes (1) bei dem Server (2) das Nutzergerät (1) anhand des in dem empfangenen Einmalpasswort (OTP) implizit enthaltenen Nutzungsidentifikators verifiziert,
   wobei der eindeutige Nutzungsidentifikator durch eine Nutzergeräte-ID des Nutzergerätes (1) gebildet wird.

2. Verfahren nach Anspruch 1,
   wobei der Server (2) das Einmalpasswort (OTP) durch Berechnen eines kryptographischen Funktionswertes des eindeutigen Nutzungsidentifikators generiert.

3. Verfahren nach Anspruch 2,
   wobei der Server (2) als Einmalpasswort (OTP) den kryptographischen Funktionswert des Nutzungsidentfikators mittels eines geheimen kryptographischen Schlüssels ($K_{priv}$) berechnet.

4. Verfahren nach Anspruch 3,

wobei der Server (2) als Einmalpasswort (OTP) den kryptographischen Funktionswert mittels einer vorgegebenen kryptographischen Funktion, insbesondere einer Hash-Funktion, für den eindeutigen Nutzungsidentifikator mittels des geheimen kryptographischen Schlüssels berechnet.

5. Verfahren nach Ansprüchen 2-4,
wobei der Server (2) als Einmalpasswort (OTP) den kryptographischen Funktionswert zusätzlich in Abhängigkeit eines Zeitstempels oder einer Zufallszahl berechnet.

6. Verfahren nach Ansprüchen 1-5,
wobei der Server (2) das durch ihn generierte Einmalpasswort (OTP) nach dessen Übertragung an das Nutzergerät (1) löscht.

7. Verfahren nach Ansprüchen 1-6,
wobei das generierte Einmalpasswort (OTP) zusammen mit dem Nutzergerät (1) an den Nutzer zur Anmeldung des Nutzergerätes (1) des Nutzers bei dem Server (2) verschickt wird.

8. Verfahren nach Ansprüchen 1-6,
wobei das generierte Einmalpasswort (OTP) von dem Server (2) über ein Datennetzwerk oder mittels eines Datenträgers zu einem bei dem Nutzer aufgestellten Nutzergerät (1) zu dessen Anmeldung bei dem Server (2) verschickt wird.

9. Verfahren nach Ansprüchen 1-8,
wobei eine Gültigkeit des von dem Server (2) generierten Einmalpasswortes (OTP) nach einer vorgegebenen Zeitdauer verfällt.

10. Server (2) zum Bereitstellen eines Einmalpasswortes (OTP) für ein Nutzergerät (1) eines Nutzers, das zur Anmeldung des Nutzergerätes (1) bei dem Server (2) vorgesehen ist, wobei der Server (2) das Einmalpasswort (OTP) mittels einer kryptographischen Operation in Abhängigkeit eines eindeutigen Nutzungsidentifikators generiert und an das Nutzergerät (1) überträgt,
wobei das Nutzergerät (1) zu dessen Anmeldung bei einem Server (2) das von dem Server (2) erhaltene Einmalpasswort (OTP) zusammen mit dem Nutzungsidentifikator an den Server (2) sendet, welcher anhand des implizit in dem Einmalpasswort (OTP) enthaltenen Nutzungsidentifikators und dem empfangenen Nutzungsidentifikator das Nutzergerät (1) verifiziert und für einen Dienst zulässt;
wobei der eindeutige Nutzungsidentifikator durch eine Nutzergeräte-ID des Nutzergerätes (1) gebildet ist.

**Claims**

1. Method for providing a one-time password (OTP) for a user device (1) of a user, said password being intended to register the user device (1) with a server (2),
wherein the server (2) generates the one-time password (OTP) using a cryptographic operation on the basis of a unique use identifier and transmits said password to the user device (1),
wherein the user device (1) stores the one-time password (OTP) received from the server (2) and transmits it with the use identifier during a registration of the user device (1) with the server (2),
wherein during the registration of the user device (1) with the server (2), the server (2) verifies the user device (1) with reference to the use identifier that is implicitly contained in the one-time password (OTP) that has been received,
wherein the unique use identifier is formed by a user device ID of the user device (1).

2. Method according to claim 1,
wherein the server (2) generates the one-time password (OTP) by calculating a cryptographic function value of the unique use identifier.

3. Method according to claim 2,
wherein the server (2) calculates the cryptographic function value of the use identifier as a one-time password (OTP) using a secret cryptographic key ($K_{priv}$).

4. Method according to claim 3,
wherein the server (2) calculates the cryptographic function value as a one-time password (OTP) by means of a predetermined cryptographic function, in particular a hash function, for the unique use identifier using the secret cryptographic key.

5. Method according to claims 2-4,
wherein the server (2) calculates the cryptographic function value as a one-time password (OTP) on the additional basis of a time stamp or random number.

6. Method according to claims 1-5,
wherein the server (2) deletes the one-time password (OTP) it has generated, after said password has been transmitted to the user device (1).

7. Method according to claims 1-6,
wherein the generated one-time password (OTP) is sent with the user device (1) to the user for the purpose of registering the user device (1) of the user with the server (2).

8. Method according to claims 1-6,
wherein the generated one-time password (OTP) is sent from the server (2) via a data network or using a data medium to a user device (1) that is sited on the premises of the user, for the purpose of registering said user device (1) with the server (2).

9. Method according to claims 1-8,
wherein a validity of the one-time password (OTP) that has been generated by the server (2) expires after a predetermined time duration.

10. Server (2) for providing a one-time password (OTP) for a user device (1) of a user, said password being intended to register the user device (1) with the server (2), wherein the server (2) generates the one-time password (OTP) using a cryptographic operation on the basis of a unique use identifier and transmits said password to the user device (1),
wherein for the purpose of registering with a server (2), the user device (1) sends both the one-time password (OTP) received from the server (2) and the use identifier to the server (2), which verifies the user device (1) with reference to the use identifier that is implicitly contained in the one-time password (OTP) and the use identifier that is received, and grants access to a service accordingly;
wherein the unique use identifier is formed by a user device ID of the user device (1).

**Revendications**

1. Procédé pour fournir un mot de passe à usage unique (OTP) destiné à un appareil utilisateur (1) d'un utilisateur et prévu pour connecter l'appareil utilisateur (1) à un serveur (2),
dans lequel le serveur (2) génère le mot de passe à usage unique (OTP) au moyen d'une opération cryptographique en fonction d'un identificateur d'utilisation univoque et le transmet à l'appareil utilisateur (1),
dans lequel l'appareil utilisateur (1) mémorise le mot de passe à usage unique (OTP) reçu par le serveur (2) et le transmet ensemble avec l'identificateur d'utilisation lors d'une connexion de l'appareil utilisateur (1) au serveur (2),
dans lequel, lors de la connexion de l'appareil utilisateur (1) au serveur (2), le serveur (2) vérifie l'appareil utilisateur (1) à l'aide de l'identificateur d'utilisation contenu implicitement dans le mot de passe à usage unique (OTP) reçu,
dans lequel l'identificateur d'utilisation univoque est formé par un identifiant d'appareil utilisateur de l'appareil utilisateur (1).

2. Procédé selon la revendication 1,
dans lequel le serveur (2) génère le mot de passe à usage unique (OTP) en calculant une valeur de fonction cryptographique de l'identificateur d'utilisation univoque.

3. Procédé selon la revendication 2,
dans lequel le serveur (2) calcule comme mot de passe à usage unique (OTP) la valeur de fonction cryptographique de l'identificateur d'utilisation au moyen d'une clé cryptographique secrète ($K_{priv}$).

4. Procédé selon la revendication 3,
dans lequel le serveur (2) calcule comme mot de passe à usage unique (OTP) la valeur de fonction cryptographique au moyen d'une fonction cryptographique prédéfinie, notamment une fonction de hachage, pour l'identificateur d'utilisation univoque au moyen de la clé cryptographique secrète.

5. Procédé selon les revendications 2-4,
dans lequel le serveur (2) calcule comme mot de passe à usage unique (OTP) la valeur de fonction cryptographique en outre en fonction d'un horodatage ou d'un nombre aléatoire.

6. Procédé selon les revendications 1-5,
dans lequel le serveur (2) efface le mot de passe à usage unique (OTP) généré par lui après sa transmission à l'appareil utilisateur (1).

7. Procédé selon les revendications 1-6,
dans lequel le mot de passe à usage unique (OTP) généré est envoyé ensemble avec l'appareil utilisateur (1) à l'utilisateur en vue de connecter l'appareil utilisateur (1) de l'utilisateur au serveur (2).

8. Procédé selon les revendications 1-6,
dans lequel le mot de passe à usage unique (OTP) généré est envoyé par le serveur (2), via un réseau de données ou au moyen d'un support de données, à un appareil utilisateur (1) installé chez l'utilisateur en vue de connecter ledit appareil au serveur (2).

9. Procédé selon les revendications 1-8,
dans lequel une validité du mot de passe à usage unique (OTP) généré par le serveur (2) expire après une durée prédéfinie.

10. Serveur (2) pour fournir un mot de passe à usage unique (OTP) destiné à un appareil utilisateur (1) d'un utilisateur et prévu pour connecter l'appareil utilisateur (1) au serveur (2),
dans lequel le serveur (2) génère le mot de passe à usage unique (OTP) au moyen d'une opération cryptographique en fonction d'un identificateur d'utilisation univoque et le transmet à l'appareil utilisateur (1),
dans lequel l'appareil utilisateur (1), en vue de le connecter à un serveur (2), envoie le mot de passe à usage unique (OTP) reçu par le serveur (2), ensemble avec l'identificateur d'utilisation, au serveur (2), lequel, à l'aide de l'identificateur d'utilisation contenu implicitement dans le mot de passe à usage unique (OTP) et de l'identificateur d'utilisation reçu, vérifie l'appareil utilisateur (1) et l'autorise pour un service ;
dans lequel l'identificateur d'utilisation univoque est formé par un identifiant d'appareil utilisateur de l'appareil utilisateur (1).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080276098 A1
- US 20070079135 A